# EUROPEAN PATENT APPLICATION

(11) **EP 4 510 696 A1**
(43) Date of publication of application: **19.02.2025**
(21) Application number: 23787765.9
(22) Date of filing: 12.04.2023
(51) Int. Cl.: H04W 28/26

(54) **RESOURCE CONFIGURATION METHOD AND APPARATUS, AND COMMUNICATION DEVICE**

(30) Priority: 15.04.2022 CN 202210399688
(71) Applicant: Vivo Mobile Communication Co., Ltd., Dongguan, Guangdong 523863 (CN)
(72) Inventor: JIANG, Lei, Dongguan, Guangdong 523863 (CN)
(74) Representative: Cabinet Beaumont
(86) International application number: PCT/CN2023/087892
(87) International publication number: WO 2023/198122

(57) **Abstract**

This application discloses a resource configuration method and apparatus, and a communication device, and relates to the field of communication technologies. The resource configuration method in the embodiments of this application includes: a first terminal obtains full duplex resources and reserved resources, where the full duplex resources include a resource with a changed transmission direction in a BWP, the reserved resources include at least part of resources in the full duplex resources and/or a first resource, and the first resource is located outside the full duplex resources.

## Description

### CROSS-REFERENCE TO RELATED APPLICATIONS

This application claims priority to Chinese Patent Application No. 202210399688.X filed on April 15, 2022, which is incorporated herein by reference in its entirety.

### TECHNICAL FIELD

This application relates to the field of communication technologies, and specifically, to resource configuration method and apparatus, and a communication device.

### BACKGROUND

In the related art, for a full duplex (full duplex) user equipment (User Equipment, UE), a base station can flexibly configure a transmission direction of some resources, and configure different transmission directions for different subbands of frequency domain resources, to achieve both uplink transmission and downlink transmission at the same moment. However, when there are both a legacy user equipment (legacy User Equipment, legacy UE) and a full duplex UE in the same serving cell, the foregoing resource configuration manner affects transmission performance of the legacy UE. In addition, for some configuration resources, such as random access resources, based on the foregoing resource configuration manner, the full duplex UE may be unable to determine available resources during random access, which also affects transmission performance of a terminal.

### SUMMARY

Embodiments of this application provide a resource configuration method and apparatus, and a communication device, which can resolve a problem in the related art that transmission performance of a terminal is affected by a resource configuration manner for flexibly configuring a transmission direction of resources.

According to a first aspect, a resource configuration method is provided. The method includes:
obtaining, by a first terminal, full duplex resources and reserved resources, where the full duplex resources include a resource with a changed transmission direction in a bandwidth part BWP, the reserved resources include at least part of resources in the full duplex resources and/or a first resource, and the first resource is located outside the full duplex resources.

According to a second aspect, a resource configuration method is provided. The method includes:
indicating, by a network side device, full duplex resources and reserved resources to a first terminal, where the full duplex resources include a resource with a changed transmission direction in a bandwidth part BWP, the reserved resources include at least part of resources in the full duplex resources and/or a first resource, and the first resource is located outside the full duplex resources.

According to a third aspect, a resource configuration apparatus is provided. The apparatus includes:
a first obtaining module, configured to obtain full duplex resources and reserved resources, where the full duplex resources include a resource with a changed transmission direction in a BWP, the reserved resources include at least part of resources in the full duplex resources and/or a first resource, and the first resource is located outside the full duplex resources.

According to a fourth aspect, a resource configuration apparatus is provided. The apparatus includes:
an indication module, configured to indicate full duplex resources and reserved resources to a first terminal, where the full duplex resources include a resource with a changed transmission direction in a bandwidth part BWP, the reserved resources include at least part of resources in the full duplex resources and/or a first resource, and the first resource is located outside the full duplex resources.

According to a fifth aspect, a terminal is provided. The terminal includes a processor and a memory, where the memory has a program or instructions stored therein and executable on the processor, the program or instructions, when executed by the processor, implementing the steps of the method according to the first aspect.

According to a sixth aspect, a terminal is provided. The terminal includes a processor and a communication interface. The communication interface is configured to obtain full duplex resources and reserved resources, where the full duplex resources include a resource with a changed transmission direction in a BWP, the reserved resources include at least part of resources in the full duplex resources and/or a first resource, and the first resource is located outside the full duplex resources.

According to a seventh aspect, a network side device is provided. The network side device includes a processor and a memory, where the memory has a program or instructions stored therein and executable on the processor, the program or instructions, when executed by the processor, implementing the steps of the method according to the second aspect.

According to an eighth aspect, a network side device is provided. The network side device includes a processor and a communication interface. The processor is configured to indicate full duplex resources and reserved resources to a first terminal, where the full duplex resources include a resource with a changed transmission direction in a bandwidth part BWP, the reserved resources include at least part of resources in the full duplex resources and/or a first resource, and the first resource is located outside the full duplex resources.

According to a ninth aspect, a resource configuration system is provided. The system includes: a terminal and a network side device, where the terminal may be configured to perform the steps of the resource configuration method according to the first aspect, and the network side device may be configured to perform the steps of the resource configuration method according to the second aspect.

According to a tenth aspect, a readable storage medium is provided. The readable storage medium has a program or instructions stored therein, the program or instructions, when executed by a processor, implementing the steps of the method according to the first aspect, or implementing the steps of the method according to the second aspect.

According to an eleventh aspect, a chip is provided. The chip includes a processor and a communication interface, where the communication interface is coupled to the processor, and the processor is configured to run a program or instructions, to implement the method according to the first aspect, or implement the method according to the second aspect.

According to a twelfth aspect, a computer program/program product is provided. The computer program/program product is stored in a storage medium, the computer program/program product, when executed by at least one processor, implementing the steps of the resource configuration method according to the first aspect or the second aspect.

In the embodiments of this application, a first terminal obtains full duplex resources and reserved resources. The full duplex resources include a resource with a changed transmission direction in a bandwidth part BWP, the reserved resources include at least part of resources in the full duplex resources and/or a first resource, and the first resource is located outside the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

### BRIEF DESCRIPTION OF THE DRAWINGS

FIG. 1 is a structural diagram of a communication system to which an embodiment of this application can be applied;
FIG. 2 is a schematic flowchart 1 of a resource configuration method according to an embodiment of this application;
FIG. 3 is a schematic diagram 1 of resource configuration according to an embodiment of this application;
FIG. 4 is a schematic diagram 2 of resource configuration according to an embodiment of this application;
FIG. 5 is a schematic diagram 3 of resource configuration according to an embodiment of this application;
FIG. 6 is a schematic diagram 4 of resource configuration according to an embodiment of this application;
FIG. 7 is a schematic flowchart 2 of a resource configuration method according to an embodiment of this application;
FIG. 8 is a schematic diagram 1 of a module of a resource configuration apparatus according to an embodiment of this application;
FIG. 9 is a schematic diagram 2 of a module of a resource configuration apparatus according to an embodiment of this application;
FIG. 10 is a structural block diagram of a communication device according to an embodiment of this application;
FIG. 11 is a structural block diagram of a terminal according to an embodiment of this application; and
FIG. 12 is a structural block diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that the embodiments of this application can be implemented in other orders than the order illustrated or described herein. Objects distinguished by "first", "second", and the like are usually one type, and a quantity of objects is not limited. For example, a first object may be one or more than one. In addition, in the specification and the claims, "and/or" represents at least one of connected objects, and the character "/" generally represents an "or" relationship between associated objects.

It should be noted that, the technologies described in the embodiments of this application are not limited to a long term evolution (Long Term Evolution, LTE)/an LTE-Advanced (LTE-Advanced, LTE-A) system, and may further be applied to other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-FDMA), and other systems. The terms "system" and "network" may usually be used interchangeably in the embodiments of this application. The described technology can be applied to the systems and radio technologies mentioned above, and can also be applied to other systems and radio technologies. The following description describes a new radio (New Radio, NR) system for example objectives, and NR terms are used in most of the description below, although these technologies are also applicable to applications other than NR system applications, such as a 6^{th} generation (6^{th} Generation, 6G) communication system.

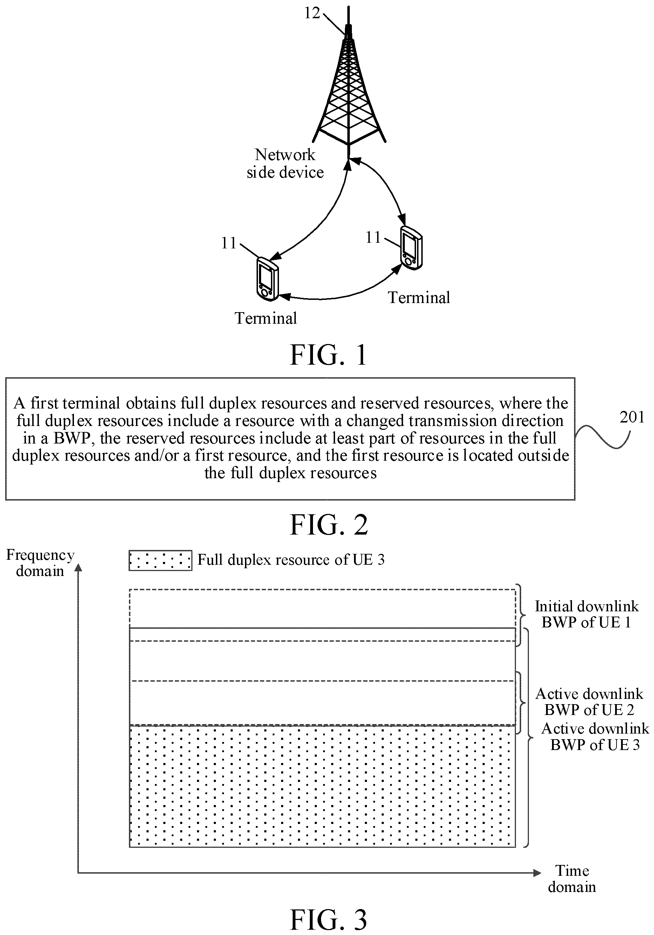

FIG. 1 is a block diagram of a wireless communication system to which an embodiment of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/a virtual reality (virtual reality, VR) device, a robot, a wearable device (Wearable Device), a vehicle user equipment (Vehicle User Equipment, VUE), a pedestrian user equipment (Pedestrian User Equipment, PUE), smart household (home devices having a wireless communication function, for example, a refrigerator, a television, a washing machine, or furniture), a game console, a personal computer (personal computer, PC), a teller machine, or a self-service machine. The wearable device includes: a smart watch, a smart wristband, smart headphones, smart glasses, smart jewelry (such as a smart bangle, a smart bracelet, a smart ring, a smart necklace, a smart anklet bangle, and a smart anklet), a smart wrist strap, smart clothes, and the like. It should be noted that, a specific type of the terminal 11 is not limited in the embodiments of this application. The network side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a WIFI node, and the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmission reception point (Transmission Reception Point, TRP) or some other suitable terms in the field. As long as the same technical effect is achieved, the base station is not limited to a specific technical word. It should be noted that, only a base station in the NR system is used as an example for description, and a specific type of the base station is not limited in the embodiments of this application.

To make a person skilled in the art better understand the embodiments of this application, the following description is first provided.

Compared with conventional mobile communication systems, 5G mobile communication systems in the future need to adapt to more diversified scenarios and service requirements. The main scenarios of 5G include enhanced mobile broadband (Enhanced Mobile Broadband, eMBB), ultra-reliable low-latency communication (Ultra-reliable Low-latency Communication, URLLC), massive machine type communication (Massive Machine Type Communication, mMTC) or massive Internet of Things services. These scenarios put forward requirements, such as high reliability, low latency, large bandwidth, and wide coverage, for the system.

In NR, a network configures a bandwidth part (Bandwidth Part, BWP) and/or a carrier for a UE for data transmission. A bandwidth of the UE may change dynamically. At a first moment, the traffic of the UE is large, and the system configures a large bandwidth (BWP1) for the UE. At a second moment, the traffic of the UE is small, and the system configures a small bandwidth (BWP2) for the UE to meet a basic communication requirement. At a third moment, the system finds that there is a wide range of frequency selective fading in a bandwidth of BWP1, or resources are scarce in a frequency range of BWP1, and therefore configures a new bandwidth (BWP3) for the UE.

Each BWP is not only different in frequency and bandwidth, but each BWP may correspond to a different configuration. For example, a subcarrier spacing, a cyclic prefix (Cyclic Prefix, CP) type, and a synchronization signal and PBCH block (SSB) period of each BWP may be configured differently to adapt to different services.

### Slot format:

In LTE, uplink/downlink configuration is in units of slots, that is, sub-frames, including seven configurations of LTE time division duplexing (Time Division Duplexing, TDD).

In NR, uplink/downlink configuration is at a symbol granularity, allowing more flexible configuration. A specific configuration process is as follows:
(1) Semi-static uplink/downlink configuration of a cell is first configured.

A higher layer provides a parameter TDD uplink-downlink common configuration (TDD-UL-DL-ConfigurationCommon). The parameter includes reference subcarrier spacing u (reference SCS configuration) and pattern1, where pattern1 further includes:
a slot configuration period (slot configuration period);
a number of slots with only downlink symbols Dslots (number of slots with only downlink symbols);
a number of downlink symbols Dsym (number of downlink symbols);
a number of slots with only uplink symbols Uslots (number of slots with only uplink symbols); and
a number of uplink symbols Usym (number of uplink symbols).

A configuration period P=0.625 ms is only valid for a 120 kHz subcarrier spacing, P=1.25 ms is only valid for 60 and 120 kHz subcarrier spacings, and P=2.5 ms is only valid for 30, 60, and 120 kHz subcarrier spacings. In this case, for a configuration period, a number of slots included in the period may be learned through a formula S=P*2u. In these slots, the first Dslots slots are downlink slots, followed by Dsym downlink symbols, followed by Usym uplink symbols, and finally Uslots uplink slots. After uplink/downlink configuration is completed in S slots, a flexible symbol X remains.

If both pattern 1 and pattern2 are given as parameters, two different slot formats may be successively configured, and a parameter form in pattern2 is similar to that in pattern1.

(2) Cell-specific uplink/downlink configuration is then configured.

If a higher layer parameter TDD uplink-downlink dedicated configuration (TDD-UL-DL-ConfigDedicated) is further provided based on the configuration in (1), the parameter may be configured with a flexible symbol configured by the parameter tdd-UL-DL-ConfigurationCommon. In other words, the uplink/downlink symbol configured in (1) is unchangeable, but the flexible symbol may be rewritten by the tdd-UL-DL-ConfigurationDedicated.

(3) Uplink/downlink configuration of dynamic downlink control information (Downlink Control Information, DCI):
uplink/downlink configuration implemented by the dynamic DCI is implemented through a DCI format 2-0, or directly through uplink/downlink data scheduling of DCI formats 0-0, 0-1, 1-0, and 1-1. The DCI format 2-0 is exclusively used for SFI indication. The SFI mainly implements a frame structure configuration of the period based on a slot format that may be supported by a single slot. To be specific, from the reception of the DCI format 2-0, there are consecutive PDCCH monitoring period slots. These slots are all configured based on an indication of a slot format indicator (Slot Format Indicator, SFI) in the DCI. A maximum number of formats supported by the single slot is 256, and there are 56 standardized formats.

It can be seen that, in the related art, different transmission directions are configured for different subbands of a frequency domain resource, so that there is both uplink transmission and downlink transmission at a same moment, and the uplink transmission and the downlink transmission are in different subbands. Considering that there may be both a legacy user equipment (legacy User Equipment, legacy UE) and a full duplex (full duplex UE) in a same serving cell, if a downlink bandwidth part (Bandwidth Part, BWP) or an uplink BWP resource of the legacy UE is also changed to perform full duplex transmission, transmission performance of the legacy UE is affected. In addition, for transmission of some configurations, such as random access, the full duplex UE needs to know a configuration of a resource in advance. If the base station (gNB) flexibly configures a random access resource or changes a configured random access resource to the full duplex resource, the full duplex UE may be unable to determine an available resource during random access. Therefore, an existing resource configuration manner for configuring different transmission directions for different subbands of the frequency domain resource affects transmission performance of the terminal.

The resource configuration method provided in the embodiments of this application is described in detail below through some embodiments and application scenarios thereof with reference to the accompanying drawings.

As shown in FIG. 2, an embodiment of this application provides a resource configuration method. The method includes:
Step 201: A first terminal obtains full duplex resources and reserved resources, where the full duplex resources include a resource with a changed transmission direction in a BWP, the reserved resources include at least part of resources in the full duplex resources and/or a first resource, and the first resource is located outside the full duplex resources.

In the embodiments of this application, the reserved resources are resources that cannot be used for full duplex transmission, the first terminal is a terminal that can perform transmission using the full duplex resources or a terminal corresponding to a BWP including the full duplex resources. The full duplex transmission refers to uplink or downlink transmission on the full duplex resource.

Optionally, the first terminal may obtain reserved resources indicated by a network side device through DCI, or may obtain the reserved resource through a system information block (System Information Block, SIB) or radio resource control (Radio Resource Control, RRC).

The reserved resources refer to resources that cannot be used for full duplex (full duplex) transmission, but do not exclude that the network side device can configure or schedule full duplex transmission on the resource. For example, the network side device configures or schedules full duplex transmission on the reserved resources, but the terminal does not perform full duplex transmission configured or scheduled by the network on the reserved resources.

In the embodiments of this application, a first terminal obtains full duplex resources and reserved resources. The full duplex resources include a resource with a changed transmission direction in a bandwidth part BWP, the reserved resources include at least part of resources in the full duplex resources and/or a first resource, and the first resource is located outside the full duplex resources. The reserved resources cannot be changed in the transmission direction as the full duplex resources for transmission. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

Optionally, the first resource is a resource reserved by the network side device in an active BWP of the first terminal, and the first resource includes at least one of an initial BWP and an active BWP of a second terminal. The second terminal includes a legacy legacy terminal or a capability capability 1 terminal.

Optionally, the at least part of resources in the full duplex resources include at least one of the following:
a second resource, where the second resource is a resource reserved by the network side device in a third resource, and the second resource corresponds to semi-statically configured transmission of the second terminal and/or the second resource corresponds to semi-statically configured monitoring of the second terminal, and the third resource is an overlapping resource of the full duplex resources of the first terminal and the first resource; and
a fourth resource, where the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

It should be noted that, the capability 1 terminal is a UE other than full duplex UE (which may also be described as a capability 2 terminal). The capability 1 terminal may also be a UE of Rel 15, Rel 16, or Rel 17, and the capability 2 terminal is a UE of Rel 18 and beyond.

For the first resource, the initial BWP includes an initial uplink BWP or an initial downlink BWP. The initial BWP is an initial BWP of the legacy UE or the full duplex UE. It should be noted that, the initial BWP of the legacy UE is the same as that of the full duplex UE.

For the second resource, the semi-statically configured transmission and/or the semi-statically configured monitoring of the second terminal includes transmission or monitoring of an SSB, a physical random access channel (Physical Random Access Channel, PRACH), a periodic channel state information (Channel State Information, CSI) reference signal (CSI Reference Signal, CSI-RS), a periodic sounding reference Signal (Sounding Reference Signal, SRS), a configured physical uplink shared channel (Physical Uplink Shared Channel, PUSCH) (configured PUSCH), a periodic or semi-persistent physical uplink control channel (Physical Uplink Control Channel, PUCCH), and a control resource Set (Control Resource Set, CORESET) or search space (search space).

For the fourth resource, the semi-statically configured transmission and/or the semi-statically configured monitoring of the first terminal includes: transmission or monitoring of an SSB, a PRACH, a periodic CSI-RS, a periodic SRS, a configured PUSCH, a periodic or semi-persistent PUCCH, and a CORESET or search space.

Optionally, the second resource further corresponds to scheduled transmission of the second terminal.

The scheduled transmission of the second terminal includes a scheduled PUCCH, a PDSCH, a PUSCH, or the like.

Optionally, a frequency domain resource unit corresponding to the second resource is at least one of the following: a subband (subband); a bandwidth part; a frequency domain range corresponding to the third resource; and a physical resource block (Physical Resource Block, PRB).

Optionally, a frequency domain resource unit corresponding to the fourth resource is at least one of the following: a subband; a bandwidth part; a frequency domain range corresponding to the full duplex resources; and a physical resource block PRB.

Optionally, a time domain resource unit corresponding to the reserved resource is at least one of the following: a slot; and a symbol.

Optionally, a transmission priority of at least one of the second resource and the fourth resource is higher than a priority of full duplex transmission of the first terminal.

Optionally, the method in the embodiments of this application further includes:
the first terminal is not expected to perform full duplex transmission on the reserved resource.

In a specific embodiment of this application, the first terminal is not expected to perform full duplex transmission on the first resource, the second resource, and the fourth resource. When a resource corresponding to full duplex transmission (uplink or downlink transmission) of the first terminal conflicts or overlaps with the second resource or the fourth resource, the first terminal cancels the full duplex transmission on the second resource or the fourth resource. When the first terminal receives an indication of the fourth resource, the first terminal detects a downlink signal or signaling or transmits an uplink signal or signaling on a corresponding resource based on a configuration of the SSB, the PRACH, the periodic CSI-RS, the periodic SRS, the configured PUSCH, the periodic or semi-persistent PUCCH, and the CORESET/search space.

Optionally, the method in the embodiments of this application further includes:
performing, by the first terminal, a corresponding terminal behavior on the reserved resource based on an initial configuration.

For example, the first terminal performs corresponding scheduled transmission or configured transmission on the initial BWP. For another example, the first terminal does not perform corresponding scheduled transmission or configured transmission on the second resource.

Optionally, the method in the embodiments of this application further includes:
performing, by the first terminal, transmission or detection of a signal on the fourth resource based on an initial configuration.

The initial configuration includes at least one of a configuration for semi-static transmission and a configuration for semi-static monitoring of the first terminal on an active uplink BWP or an active downlink BWP.

For example, the initial configuration includes a configuration of an SSB of the first terminal on the active downlink BWP, a PRACH on the active uplink BWP, or the like.

In a specific embodiment of this application, during selection of a full duplex resource, the gNB skips an initial (initial) downlink (DownLink, DL)/uplink (UpLink, LTL) BWP or an active (active) DL/UL BWP of the legacy UE. In other words, the full duplex resource and the foregoing BWP do not overlap in a frequency domain. As shown in FIG. 3, during selection of the full duplex resources for a full duplex UE 3, reserved resources are an initial DL BWP of a UE 1 and an active DL BWP of a legacy UE 2. These resources cannot be used as the full duplex resources. Therefore, when configuring the full duplex resources for the UE 3, the base station can only configure the active DL BWP of the UE 3 on resources other than an overlapping part with the initial DL BWP of the UE 1 and the active DL BWP of the UE 2. The full duplex resources are used for uplink transmission. Similarly, if a LTL BWP is shown in FIG. 3, the full duplex resources may be used for downlink transmission.

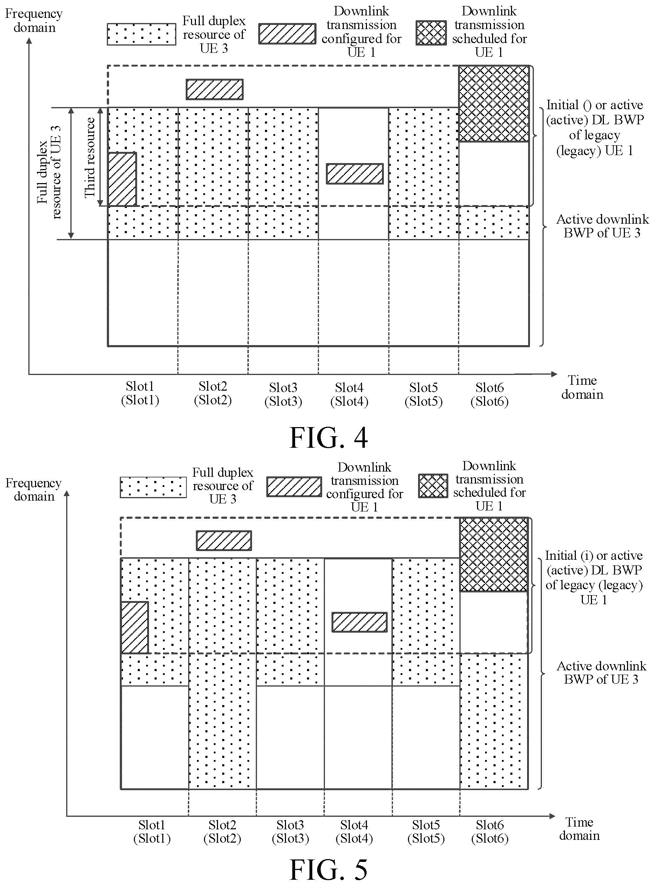

In still another specific embodiment of this application, as shown in FIG. 4, an initial or active DL BWP of a legacy UE 1 overlaps with the full duplex resources of the full duplex UE 3, and the third resource is an overlapping part of the two. For ease of description, it is assumed that the full duplex resources of UE 3 are of a same size from slot! to slot6. On the third resource, all resources corresponding to semi-statically configured transmission or monitoring of the UE 1 are the second resource, for example, transmission resources corresponding to an SSB, a PRACH, a periodic CSI-RS, a periodic SRS, a configured PUSCH, a periodic or semi-persistent PUCCH, and a CORESET/search space are included. The second resource cannot be used for full duplex transmission. The initial/active DL BWP of the UE 1 in FIG. 4 includes configured downlink transmission in slot! and slot4. Therefore, the third resource including the second resource for downlink transmission needs to be reserved. The granularity of resource reservation may be slot or symbol in a time domain; and may be subband/BWP/third resource/PRB in a frequency domain. For example, in slot4, an entire third resource is used as a reserved resource, that is, the granularity of resource reservation is {slot, third resource}. In slot!, on the third resource, resources other than configured downlink resources are used as full duplex resources for uplink transmission. In this case, the granularity of resource reservation is {symbol, PRB}. For example, the reserved resource is indicated as {slot1, PRB10-PRB15}.

In addition, the second resource may further include, in addition to the configured resources in the third resource, resources used for transmitting information about the legacy UE 1, for example, resources used for transmitting a scheduled PDSCH, a PUSCH, and a PUCCH. For example, if the PDSCH of the UE 1 is scheduled in slot6, the second resource including the PDSCH in the third resource needs to be reserved. In this case, the granularity of resource reservation is {slot, third resource}.

Further, the second resource may be an entire subband or a BWP, depending on a configuration of the full duplex resource. FIG. 5 gives an example. Full duplex resources of the UE 3 in slot2, slot4, and slot6 are an entire active DL BWP, and full duplex resource configurations in slot!, slot3, and slot5 are shown in FIG. 4. In slot4, because there is DL transmission by the legacy UE 1, an entire slot cannot be used for full duplex transmission, that is, the granularity of resource reservation is {slot, BWP}. For example, assuming that a currently active BWP is BWP1, it indicates that the reserved resource is {slot4, BWP1}. The granularity of resource reservation of slot1 and slot6 is the same as that of FIG. 2. Details are not described herein again. When the time domain granularity is slot, a specific slot may also be implicitly obtained by transmitting an indicated slot.

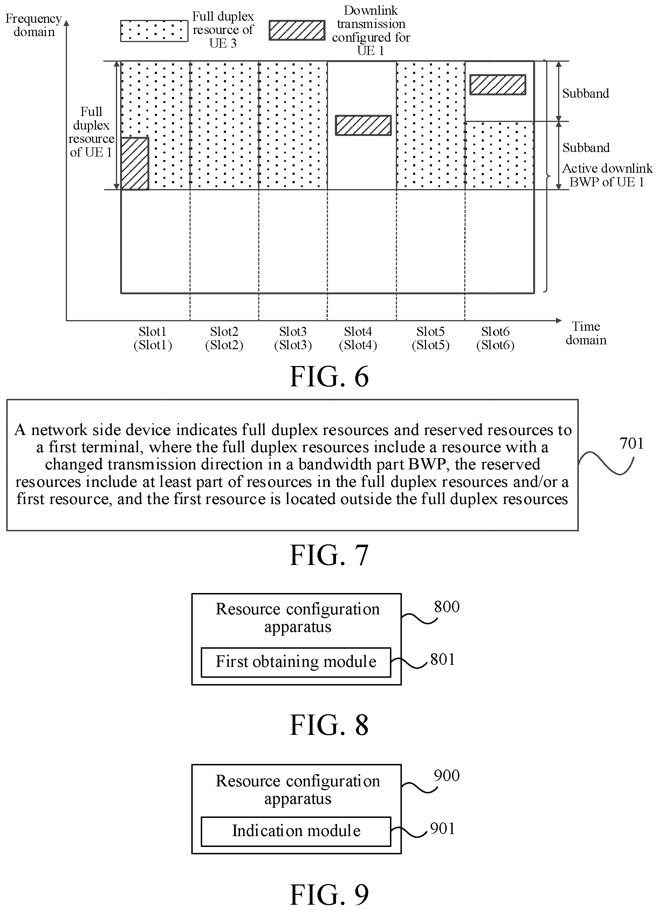

In another specific embodiment of this application, as shown in FIG. 6, a full duplex UE 1 is configured with a full duplex resource in the active DL BWP, and the full duplex resource includes two subbands. A fourth resource is reserved in the full duplex resource, and the fourth resource cannot be used for full duplex transmission. The fourth resource includes a resource corresponding to semi-statically configured transmission or monitoring on the active DL/UL BWP of the UE 1. The semi-statically configured transmission or monitoring includes resources corresponding to an SSB, a PRACH, a periodic CSI-RS, a periodic SRS, a configured PUSCH, a periodic or semi-persistent PUCCH, a CORESET/search space, and the like. A transmission direction of the fourth resource is consistent with a transmission direction of the active DL/UL BWP, and is inconsistent with a transmission direction of the full duplex resource. In slot!, the fourth resource is a resource corresponding to configured downlink transmission. In slot4, the fourth resource is the full duplex resource, and the fourth resource includes a resource corresponding to configured downlink transmission. In slot6, the fourth resource is a first subband, and the fourth resource includes a resource corresponding to configured downlink transmission. Correspondingly, the granularities of resource reservation are {symbol, PRB}, {slot, full duplex resource}, and {slot, subband} respectively. When specifically indicated, a corresponding slot/symbol and a corresponding PRB/full duplex resource/subband may be indicated. When the time domain granularity is slot, a specific slot may also be implicitly obtained by transmitting an indicated slot.

In yet another specific embodiment of this application, the gNB indicates the second resource and/or the fourth resource to the first terminal through DCI. Specifically, the indication may be performed based on the granularity of resource reservation. When the time domain granularity of the reserved resource is symbol, the time domain granularity of the reserved resource may be indicated through additional time domain resource allocation (Time Domain Resource Allocation, TDRA). For example, a start and length indicator value (Start and length indicator value, SLIV) may be used to indicate a time domain start symbol and a time domain end symbol of the reserved resource. When the time domain granularity of the reserved resource is slot, whether the slot is reserved may be indicated through an SLIV, or indicated through 1 bit. In addition, a time domain offset (offset) of the reserved resource may be further indicated in the DCI, representing a time domain offset between the DCI and the reserved resource. The second resource and/or the fourth resource may indicate a reserved PRB through additional frequency domain resource allocation (Frequency Domain Resource Allocation, FDRA). When the granularity of the second resource is subband/BWP/third resource, the indication may be further simplified, and whether the subband/BWP/third resource is reserved is indicated through 1 bit. When the granularity of the fourth resource is subband/BWP/full duplex resource, the indication may be further simplified, and whether the subband/BWP/full duplex resource is reserved is indicated through 1 bit. Information about the subband/BWP/third resource/full duplex resource may be learned through another RRC signaling.

In addition, the gNB may alternatively indicate, through 1 bit of the RRC or the DCI, whether there is the fourth resource, that is, whether a resource corresponding to the semi-statically configured transmission or monitoring is reserved. The semi-statically configured transmission or monitoring includes transmission or monitoring corresponding to an SSB, a PRACH, a periodic CSI-RS, a periodic SRS, a configured PUSCH, a periodic or semi-persistent PUCCH, and a CORESET/search space. The UE obtains information about the semi-statically configured transmission or monitoring through RRC configuration.

In the embodiments of this application, a first terminal obtains full duplex resources and reserved resources. The full duplex resources include a resource with a changed transmission direction in a bandwidth part BWP, and the reserved resources include at least part of resources in the full duplex resource and/or a resource other than the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

As shown in FIG. 7, an embodiment of this application further provides a resource configuration method. The method includes:
Step 701: A network side device indicates full duplex resources and reserved resources to a first terminal, where the full duplex resources include a resource with a changed transmission direction in a bandwidth part BWP, the reserved resources include at least part of resources in the full duplex resources and/or a first resource, and the first resource is located outside the full duplex resources.

Optionally, the first resource is a resource reserved by the network side device in an active BWP of the first terminal, and the first resource includes at least one of an initial BWP and an active BWP of a second terminal. The second terminal is a terminal that does not support a full duplex capability.

Optionally, the at least part of resources in the full duplex resources include at least one of the following:
a second resource, where the second resource is a resource reserved by the network side device in a third resource, and the second resource corresponds to semi-statically configured transmission of the second terminal and/or the second resource corresponds to semi-statically configured monitoring of the second terminal, and the third resource is an overlapping resource of the full duplex resources of the first terminal and the first resource; and
a fourth resource, where the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

The reserved resource has been described in detail in the foregoing embodiment on the terminal. Details are not described herein again.

Optionally, the second resource further corresponds to scheduled transmission of the second terminal.

Optionally, a frequency domain resource unit corresponding to the second resource is at least one of the following: a subband; a bandwidth part;
a frequency domain range corresponding to the third resource; and a physical resource block PRB.

Optionally, a frequency domain resource unit corresponding to the fourth resource is at least one of the following: a subband; a bandwidth part;
a frequency domain range corresponding to the full duplex resources; and a physical resource block PRB.

Optionally, a time domain resource unit corresponding to the reserved resource is at least one of the following: a slot; and a symbol.

Optionally, a transmission priority of at least one of the second resource and the fourth resource is higher than a priority of full duplex transmission of the first terminal.

In the embodiments of this application, the network side device indicates full duplex resources and reserved resources to the first terminal. The full duplex resources include a resource with a changed transmission direction in a bandwidth part BWP, the reserved resources include at least part of resources in the full duplex resources and/or a first resource, and the first resource is located outside the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

For the resource configuration method provided in the embodiments of this application, an execution body may be a resource configuration apparatus. In the embodiments of this application, an example in which the resource configuration apparatus performs the resource configuration method is used to describe the resource configuration apparatus provided in the embodiments of this application.

As shown in FIG. 8, an embodiment of this application further provides a resource configuration apparatus 800, applied to a first terminal. The apparatus includes:
a first obtaining module 801, configured to obtain full duplex resources and reserved resources, where the full duplex resources include a resource with a changed transmission direction in a bandwidth part BWP, the reserved resources include at least part of resources in the full duplex resources and/or a first resource, and the first resource is located outside the full duplex resources.

Optionally, the first resource is a resource reserved by a network side device in an active BWP of the first terminal, and the first resource includes at least one of an initial BWP and an active BWP of a second terminal.

Optionally, the at least part of resources in the full duplex resources include at least one of the following:
a second resource, where the second resource is a resource reserved by the network side device in a third resource, and the second resource corresponds to semi-statically configured transmission of the second terminal and/or the second resource corresponds to semi-statically configured monitoring of the second terminal, and the third resource is an overlapping resource of the full duplex resources of the first terminal and the first resource; and
a fourth resource, where the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

Optionally, the second resource further corresponds to scheduled transmission of the second terminal.

Optionally, a frequency domain resource unit corresponding to the second resource is at least one of the following: a subband; a bandwidth part;
a frequency domain range corresponding to the third resource; and a physical resource block PRB.

Optionally, a frequency domain resource unit corresponding to the fourth resource is at least one of the following: a subband; a bandwidth part;
a frequency domain range corresponding to the full duplex resources; and a physical resource block PRB.

Optionally, a time domain resource unit corresponding to the reserved resource is at least one of the following: a slot; and a symbol.

Optionally, a transmission priority of at least one of the second resource and the fourth resource is higher than a priority of full duplex transmission of the first terminal.

Optionally, the apparatus in the embodiments of this application further includes:
a first processing module, configured to be not expected to perform full duplex transmission on the reserved resource.

Optionally, the apparatus in the embodiments of this application further includes:
a second processing module, configured to perform transmission or detection of a signal on the fourth resource based on an initial configuration, where
the initial configuration includes at least one of a configuration for semi-static transmission and a configuration for semi-static monitoring of the first terminal on the active BWP.

In the embodiments of this application, a first terminal obtains full duplex resources and reserved resources. The full duplex resources include a resource with a changed transmission direction in a bandwidth part BWP, the reserved resources include at least part of resources in the full duplex resources and/or a first resource, and the first resource is located outside the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

The resource configuration apparatus in this embodiment of this application may be an electronic device, for example, an electronic device having an operating system, or may be a component, for example, an integrated circuit or a chip, in an electronic device. The electronic device may be a terminal or may be another device other than a terminal. For example, the terminal may include, but not limited to, the types of the terminal 11 listed above, and another device may be a server, a network attached storage (Network Attached Storage, NAS), and the like. This is not specifically limited in the embodiments of this application.

The resource configuration apparatus provided in this embodiment of this application can implement all processes implemented by the method embodiment of FIG. 2, and achieve the same technical effects. To avoid repetition, details are not described herein again.

As shown in FIG. 9, an embodiment of this application further provides a resource configuration apparatus 900, applied to a network side device. The apparatus includes:
an indication module 901, configured to indicate full duplex resources and reserved resources to a first terminal, where the full duplex resources include a resource with a changed transmission direction in a bandwidth part BWP, the reserved resources include at least part of resources in the full duplex resources and/or a first resource, and the first resource is located outside the full duplex resources.

Optionally, the first resource is a resource reserved by the network side device in an active BWP of the first terminal, and the first resource includes at least one of an initial BWP and an active BWP of a second terminal. The second terminal is a terminal that does not support a full duplex capability.

Optionally, the at least part of resources in the full duplex resources include at least one of the following:
a second resource, where the second resource is a resource reserved by the network side device in a third resource, and the second resource corresponds to semi-statically configured transmission of the second terminal and/or the second resource corresponds to semi-statically configured monitoring of the second terminal, and the third resource is an overlapping resource of the full duplex resources of the first terminal and the first resource; and
a fourth resource, where the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

Optionally, the second resource further corresponds to scheduled transmission of the second terminal.

Optionally, a frequency domain resource unit corresponding to the second resource is at least one of the following: a subband; a bandwidth part;
a frequency domain range corresponding to the third resource; and a physical resource block PRB.

Optionally, a frequency domain resource unit corresponding to the fourth resource is at least one of the following: a subband; a bandwidth part;
a frequency domain range corresponding to the full duplex resources; and a physical resource block PRB.

Optionally, a time domain resource unit corresponding to the reserved resource is at least one of the following: a slot; and a symbol.

Optionally, a transmission priority of at least one of the second resource and the fourth resource is higher than a priority of full duplex transmission of the first terminal.

In the embodiments of this application, the network side device indicates full duplex resources and reserved resources to the first terminal. The full duplex resources include a resource with a changed transmission direction in a BWP, the reserved resources include at least part of resources in the full duplex resources and/or a first resource, and the first resource is located outside the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

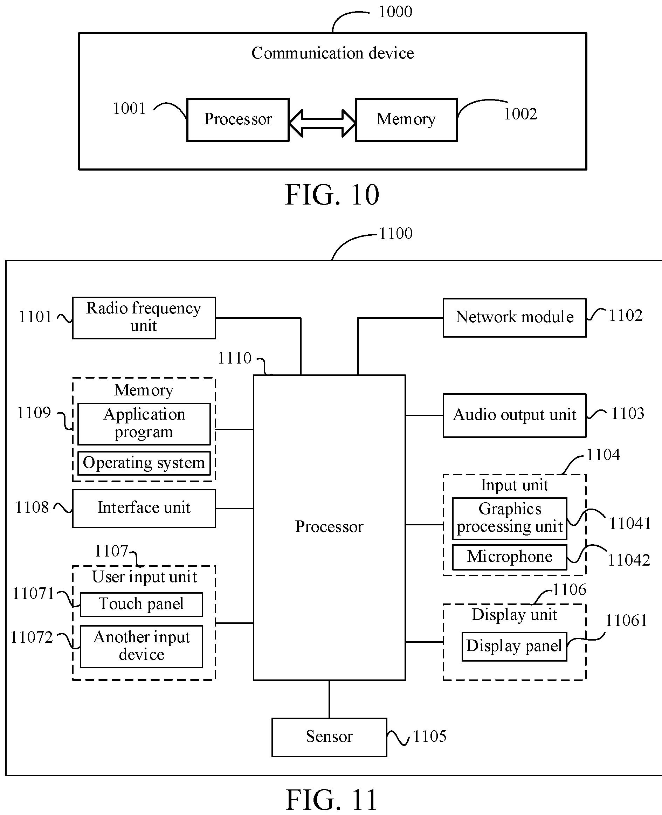

Optionally, as shown in FIG. 10, an embodiment of this application further provides a communication device 1000, including a processor 1001 and a memory 1002, where the memory 1002 has a program or instructions stored therein and executable on the processor 1001. For example, when the communication device 1000 is a terminal, the program or instructions is executed by the processor 1001 to implement the steps of the foregoing resource configuration method embodiments on the first terminal, and the same technical effects can be achieved. When the communication device 1000 is a network side device, the program or instructions is executed by the processor 1001 to implement the steps of the foregoing resource configuration method embodiments on the network side device, and the same technical effects can be achieved. To avoid repetition, details are not described herein again.

An embodiment of this application further provides a terminal, including a processor and a communication interface. The communication interface is configured to obtain full duplex resources and reserved resources, where the full duplex resources include a resource with a changed transmission direction in a bandwidth part BWP, the reserved resources include at least part of resources in the full duplex resources and/or a first resource, and the first resource is located outside the full duplex resources. The terminal embodiment corresponds to the foregoing terminal-side method embodiment, and the various implementation processes and implementations of the foregoing method embodiments can be applied to the terminal embodiment, and can achieve the same technical effects. Specifically, FIG. 11 is a schematic diagram of a hardware structure of a terminal that implements the embodiments of this application.

The terminal 1100 includes, but is not limited to: at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 further includes a power supply (such as a battery) for supplying power to the components. The power supply may logically connect to the processor 1110 by using a power supply management system, thereby implementing functions, such as charging, discharging, and power consumption management, by using the power supply management system. A terminal structure shown in FIG. 11 does not constitute a limitation to the terminal, and the terminal may include more or fewer components than those shown in the figure, or some components may be combined, or a different component deployment may be used. Details are not described herein again.

It should be understood that, in the embodiments of this application, the input unit 1104 may include a graphics processing unit (Graphics Processing Unit, GPU) 11041 and a microphone 11042. The graphics processing unit 11041 performs processing on image data of a static picture or a video that is obtained by an image acquisition apparatus (for example, a camera) in a video acquisition mode or an image acquisition mode. The display unit 1106 may include a display panel 11061, for example, the display panel 11061 may be configured in a form such as a liquid crystal display or an organic light-emitting diode. The user input unit 1107 includes at least one of a touch panel 11071 or another input device 11072. The touch panel 11071 is also referred to as a touch screen. The touch panel 11071 may include two parts: a touch detection apparatus and a touch controller. The another input device 11072 may include, but not limited to, a physical keyboard, a functional key (such as a volume control key or a switch key), a track ball, a mouse, and a joystick, and details are not described herein again.

In this embodiment of this application, the radio frequency unit 1101 receives downlink data from a network side device and then transmits the downlink data to the processor 1110 for processing. In addition, the radio frequency unit 1101 may send uplink data to the network side device. Generally, the radio frequency unit 1101 includes, but not limited to, an antenna, an amplifier, a transceiver, a coupler, a low noise amplifier, a duplexer, and the like.

The memory 1109 may be configured to store a software program or instructions and various data. The memory 1109 may mainly include a first storage region for storing a program or instructions and a second storage region for storing data. The first storage region may store an operating system, an application program or instructions required by at least one function (for example, a sound playback function and an image playback function), or the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDR SDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 1109 in the embodiments of this application includes, but not limited to, these memories and any other suitable types of memories.

The processor 1110 may include one or more processing units. Optionally, the processor 1110 integrates an application processor and a modem processor. The application processor mainly processes operations related to an operating system, a user interface, and an application program. The modem processor mainly processes a wireless communication signal, such as a baseband processor. The foregoing modem processor may not be integrated into the processor 1110.

The radio frequency unit 1101 is configured to obtain full duplex resources and reserved resources, where the full duplex resources include a resource with a changed transmission direction in a bandwidth part BWP, the reserved resources include at least part of resources in the full duplex resources and/or a first resource, and the first resource is located outside the full duplex resources.

Optionally, the first resource is a resource reserved by a network side device in an active BWP of a first terminal, and the first resource includes at least one of an initial BWP and an active BWP of a second terminal.

Optionally, the at least part of resources in the full duplex resources include at least one of the following:
a second resource, where the second resource is a resource reserved by the network side device in a third resource, and the second resource corresponds to semi-statically configured transmission of the second terminal and/or the second resource corresponds to semi-statically configured monitoring of the second terminal, and the third resource is an overlapping resource of the full duplex resources of the first terminal and the first resource; and
a fourth resource, where the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

Optionally, the second resource further corresponds to scheduled transmission of the second terminal.

Optionally, a frequency domain resource unit corresponding to the second resource is at least one of the following: a subband; a bandwidth part; a frequency domain range corresponding to the third resource; and a physical resource block PRB.

Optionally, a frequency domain resource unit corresponding to the fourth resource is at least one of the following: a subband; a bandwidth part; a frequency domain range corresponding to the full duplex resources; and a physical resource block PRB.

Optionally, a time domain resource unit corresponding to the reserved resource is at least one of the following: a slot; and a symbol.

Optionally, a transmission priority of at least one of the second resource and the fourth resource is higher than a priority of full duplex transmission of the first terminal.

Optionally, the processor 1110 is configured to: be not expected to perform full duplex transmission on the reserved resources.

Optionally, the processor 1110 is further configured to: perform, by the first terminal, transmission or detection of a signal on the fourth resource based on an initial configuration.

The initial configuration includes at least one of a configuration for semi-static transmission and a configuration for semi-static monitoring of the first terminal on the active BWP.

In the embodiments of this application, full duplex resources and reserved resources are obtained. The full duplex resources include a resource with a changed transmission direction in a bandwidth part BWP, the reserved resources include at least part of resources in the full duplex resources and/or a first resource, and the first resource is located outside the full duplex resources. The reserved resources cannot be transmitted as the full duplex resources by changing the transmission direction. Therefore, through the reserved resources, a legacy UE or a UE using the full duplex resources can normally perform uplink and downlink transmission that is originally configured or scheduled, which avoids missing a corresponding transmission resource due to the changed transmission direction of the resource, thereby ensuring transmission performance of the terminal, and further improving transmission performance of the system.

An embodiment of this application further provides a network side device, including a processor and a communication interface. The processor is configured to indicate full duplex resources and reserved resources to a first terminal, the full duplex resources include a resource with a changed transmission direction in a bandwidth part BWP, the reserved resources include at least part of resources in the full duplex resources and/or a first resource, and the first resource is located outside the full duplex resources. The network side device embodiment corresponds to the foregoing network side device method embodiment, and the various implementation processes and implementations of the foregoing method embodiments can be applied to the network side device embodiment, and can achieve the same technical effect.

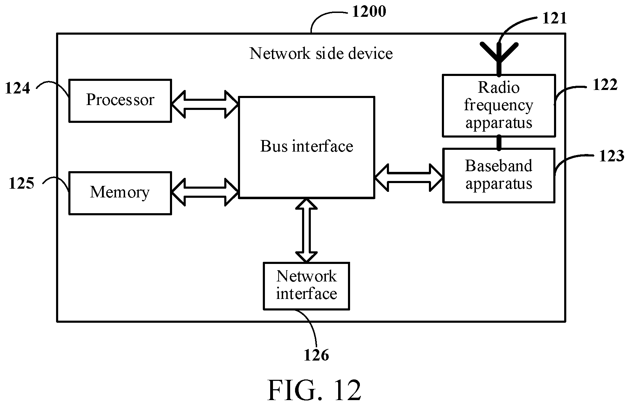

Specifically, an embodiment of this application further provides a network side device. As shown in FIG. 12, a network side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121 and sends the received information to the baseband apparatus 123 for processing. In a downlink direction, the baseband apparatus 123 processes information that needs to be sent and sends the information to the radio frequency apparatus 122. The radio frequency apparatus 122 processes the received information and sends the received information through the antenna 121.

The method executed by the network side device in the foregoing embodiment may be implemented in the baseband apparatus 123. The baseband apparatus 123 includes a baseband processor.

The baseband apparatus 123 may include, for example, at least one baseband plate. A plurality of chips are disposed on the baseband plate. As shown in FIG. 12, one of the plurality of chips is, for example, the baseband processor, and is connected to the memory 125 through a bus interface, to invoke a program in the memory 125 to perform a network device operation shown in the foregoing method embodiment.

The network side device may further include a network interface 126, and the interface is, for example, a common public radio interface (common public radio interface, CPRI).

Specifically, the network side device 1200 in this embodiment of this application further includes: instructions or a program stored in the memory 125 and executable on the processor 124. The processor 124 invokes the instructions or program in the memory 125 to perform the methods executed by each module shown in FIG. 9, and can achieve the same technical effects. To avoid repetition, details are not described herein again.

An embodiment of this application further provides a readable storage medium, having a program or instructions stored therein. The program or instructions, when executed by a processor, implements all processes of the foregoing resource configuration method embodiments, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface, where the communication interface is coupled to the processor, and the processor is configured to run a program or instructions, to implement all processes of the foregoing resource configuration method embodiments, and the same technical effects can be achieved. To avoid repetition, details are not described herein again.

It should be understood that, the chip described in the embodiments of this application may also be referred to as a system-level chip, a system chip, a chip system, a system on chip, or the like.

An embodiment of this application further provides a computer program/program product, where the computer program/program product is stored in a storage medium and executed by at least one processor to implement all processes of the foregoing resource configuration method embodiments, and the same technical effects can be achieved. To avoid repetition, details are not described herein again.

An embodiment of this application further provides a resource configuration system. The system includes: a terminal and a network side device, where the terminal may be configured to perform the steps of the resource configuration method applied to the first terminal described above, and the network side device may be configured to perform the steps of the resource configuration method applied to the network side device described above.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing the functions in the order shown or discussed, but also can include performing the functions in basically a same way or in the opposite order according to the functions involved, for example, the described methods may be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the conventional technologies may be implemented in the form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

## Claims

1. A resource configuration method, comprising:
obtaining, by a first terminal, full duplex resources and reserved resources, wherein the full duplex resources comprise a resource with a changed transmission direction in a bandwidth part BWP, the reserved resources comprise at least part of resources in the full duplex resources and/or a first resource, and the first resource is located outside the full duplex resources.

2. The method according to claim 1, wherein
the first resource is a resource reserved by a network side device in an active BWP of the first terminal, and the first resource comprises at least one of an initial BWP and an active BWP of a second terminal.

3. The method according to claim 1 or 2, wherein the at least part of resources in the full duplex resources comprise at least one of the following:
a second resource, wherein the second resource is a resource reserved by a network side device in a third resource, and the second resource corresponds to semi-statically configured transmission of a second terminal and/or the second resource corresponds to semi-statically configured monitoring of the second terminal, and the third resource is an overlapping resource of the full duplex resources of the first terminal and the first resource; and
a fourth resource, wherein the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

4. The method according to claim 3, wherein the second resource further corresponds to scheduled transmission of the second terminal.

5. The method according to claim 3 or 4, wherein a frequency domain resource unit corresponding to the second resource is at least one of the following:
a subband;
a bandwidth part;
a frequency domain range corresponding to the third resource; and
a physical resource block PRB; or
a frequency domain resource unit corresponding to the fourth resource is at least one of the following:
a subband;
a bandwidth part;
a frequency domain range corresponding to the full duplex resources; and
a physical resource block PRB.

6. The method according to claim 1, wherein a time domain resource unit corresponding to the reserved resource is at least one of the following:
a slot; and
a symbol.

7. The method according to claim 3, wherein a transmission priority of at least one of the second resource and the fourth resource is higher than a priority of full duplex transmission of the first terminal.

8. The method according to claim 1, further comprising:
the first terminal is not expected to perform full duplex transmission on the reserved resource.

9. The method according to claim 3, further comprising:
performing, by the first terminal, transmission or detection of a signal on the fourth resource based on an initial configuration, wherein
the initial configuration comprises at least one of a configuration for semi-static transmission and a configuration for semi-static monitoring of the first terminal on an active BWP.

10. A resource configuration method, comprising:
indicating, by a network side device, full duplex resources and reserved resources to a first terminal, wherein the full duplex resources comprise a resource with a changed transmission direction in a bandwidth part BWP, the reserved resources comprise at least part of resources in the full duplex resources and/or a first resource, and the first resource is located outside the full duplex resources.

11. The method according to claim 10, wherein the first resource is a resource reserved by the network side device in an active BWP of the first terminal, and the first resource comprises at least one of an initial BWP and an active BWP of a second terminal.

12. The method according to claim 10 or 11, wherein the at least part of resources in the full duplex resources comprise at least one of the following:
a second resource, wherein the second resource is a resource reserved by the network side device in a third resource, and the second resource corresponds to semi-statically configured transmission of a second terminal and/or the second resource corresponds to semi-statically configured monitoring of the second terminal, and the third resource is an overlapping resource of the full duplex resources of the first terminal and the first resource; and
a fourth resource, wherein the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

13. The method according to claim 12, wherein the second resource further corresponds to scheduled transmission of the second terminal.

14. The method according to claim 12 or 13, wherein a frequency domain resource unit corresponding to the second resource is at least one of the following:
a subband;
a bandwidth part;
a frequency domain range corresponding to the third resource; and
a physical resource block PRB; or
a frequency domain resource unit corresponding to the fourth resource is at least one of the following:
a subband;
a bandwidth part;
a frequency domain range corresponding to the full duplex resources; and
a physical resource block PRB.

15. The method according to claim 10, wherein a time domain resource unit corresponding to the reserved resource is at least one of the following:
a slot; and
a symbol.

16. The method according to claim 12, wherein a transmission priority of at least one of the second resource and the fourth resource is higher than a priority of full duplex transmission of the first terminal.

17. A resource configuration apparatus, comprising:
a first obtaining module, configured to obtain full duplex resources and reserved resources, wherein the full duplex resources comprise a resource with a changed transmission direction in a BWP, the reserved resources comprise at least part of resources in the full duplex resources and/or a first resource, and the first resource is located outside the full duplex resources.

18. The apparatus according to claim 17, wherein the first resource is a resource reserved by a network side device in an active BWP of a first terminal, and the first resource comprises at least one of an initial BWP and an active BWP of a second terminal.

19. The apparatus according to claim 17 or 18, wherein the at least part of resources in the full duplex resources comprise at least one of the following: a second resource, wherein the second resource is a resource reserved by a network side device in a third resource, and the second resource corresponds to semi-statically configured transmission of a second terminal and/or the second resource corresponds to semi-statically configured monitoring of the second terminal, and the third resource is an overlapping resource of the full duplex resources of the first terminal and the first resource; and
a fourth resource, wherein the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

20. The apparatus according to claim 19, wherein the second resource further corresponds to scheduled transmission of the second terminal.

21. The apparatus according to claim 19 or 20, wherein a frequency domain resource unit corresponding to the second resource is at least one of the following:
a subband;
a bandwidth part;
a frequency domain range corresponding to the third resource; and
a physical resource block PRB; or
a frequency domain resource unit corresponding to the fourth resource is at least one of the following:
a subband;
a bandwidth part;
a frequency domain range corresponding to the full duplex resources; and
a physical resource block PRB.

22. The apparatus according to claim 17, wherein a time domain resource unit corresponding to the reserved resource is at least one of the following:
a slot; and
a symbol.

23. The apparatus according to claim 19, wherein a transmission priority of at least one of the second resource and the fourth resource is higher than a priority of full duplex transmission of the first terminal.

24. The apparatus according to claim 17, further comprising:
a first processing module, configured to be not expected to perform full duplex transmission on the reserved resource.

25. The apparatus according to claim 19, further comprising:
a second processing module, configured to perform transmission or detection of a signal on the fourth resource based on an initial configuration, wherein
the initial configuration comprises at least one of a configuration for semi-static transmission and a configuration for semi-static monitoring of the first terminal on an active BWP.

26. A resource configuration apparatus, comprising:
an indication module, configured to indicate full duplex resources and reserved resources to a first terminal, wherein the full duplex resources comprise a resource with a changed transmission direction in a bandwidth part BWP, the reserved resources comprise at least part of resources in the full duplex resources and/or a first resource, and the first resource is located outside the full duplex resources.

27. The apparatus according to claim 26, wherein the first resource is a resource reserved by a network side device in an active BWP of the first terminal, and the first resource comprises at least one of an initial BWP and an active BWP of a second terminal.

28. The apparatus according to claim 26 or 27, wherein the at least part of resources in the full duplex resources comprise at least one of the following:
a second resource, wherein the second resource is a resource reserved by the network side device in a third resource, and the second resource corresponds to semi-statically configured transmission of a second terminal and/or the second resource corresponds to semi-statically configured monitoring of the second terminal, and the third resource is an overlapping resource of the full duplex resources of the first terminal and the first resource; and
a fourth resource, wherein the fourth resource is a resource reserved by the network side device in the full duplex resources of the first terminal, and the fourth resource corresponds to semi-statically configured transmission of the first terminal and/or the fourth resource corresponds to semi-statically configured monitoring of the first terminal.

29. A terminal, comprising a processor and a memory, wherein the memory stores a program or instructions executable on the processor, the program or instructions, when executed by the processor, implementing the steps of the resource configuration method according to any one of claims 1 to 9.

30. A network side device, comprising a processor and a memory, wherein the memory storing a program or instructions executable on the processor, the program or instructions, when executed by the processor, implementing the steps of the resource configuration method according to any one of claims 10 to 16.

31. A readable storage medium, having a program or instructions stored therein, the program or instructions, when executed by a processor, implementing the steps of the resource configuration method according to any one of claims 1 to 9, or implementing the steps of the resource configuration method according to any one of claims 10 to 16.
